# EUROPEAN PATENT APPLICATION

(11) **EP 4 683 303 A1**
(43) Date of publication of application: **21.01.2026**
(21) Application number: 25187794.0
(22) Date of filing: 07.07.2025
(51) Int. Cl.: H04L 67/12, H04W 4/40, H04W 4/90, H04W 84/12

(54) **DEVICE AND METHOD FOR COLLECTING OCCUPANT INFORMATION IN A VEHICLE**

(30) Priority: 16.07.2024 KR 20240093620
(71) Applicant: Hyundai Mobis Co., Ltd., Gangnam-gu Seoul 06141 (KR)
(72) Inventor: KIM, Seong Jin, 16891 Yongin-si, Gyeonggi-do (KR)
(74) Representative: Jung, Minkyu

(57) **Abstract**

A device for collecting occupant information in a vehicle according to an embodiment of the present disclosure includes a processor configured to collect occupant information in the vehicle and memory that stores at least one instruction executed by the processor. When an emergency occurs in the vehicle, the processor broadcasts emergency Wi-Fi connection information to connect with a user terminal via emergency Wi-Fi (eWIFI), collects the occupant information from the user terminal connected via the emergency Wi-Fi, and transmits the information to a Public Safety Answering Point (PSAP) server.

## Description

### BACKGROUND

### FIELD

Exemplary embodiments of the present disclosure relate to a device and method for collecting occupant information in a vehicle.

### DISCUSSION OF THE BACKGROUND

There are cases where vehicles are involved in traffic accidents while on the road. In this case, if rescuers immediately acquire accident information and provide assistance, the accident victims may be rescued immediately, thereby reducing property loss and casualties.

To enable rescuers to immediately acquire accident information, an in-vehicle emergency call (eCall) system may be installed in the vehicle. The eCall system is a representative application for the connectivity of vehicles to the internet. When an accident occurs, this system uses technologies such as vehicle sensing, mobile communication, and satellite positioning to promptly contact a public rescue center, automatically transmit vehicle location and vehicle information to the rescue center, enable the rescue center to confirm the accident, and facilitate rescue of the victims.

However, traditionally, due to vulnerabilities such as personal information leakage in such emergencies, the function of collecting occupant information in vehicles has not been provided. Therefore, it is necessary to develop a device that may collect occupant information in a vehicle while preventing the leakage of the occupant's personal information.

### SUMMARY

An embodiment of the present disclosure provides a device and method for collecting occupant information in a vehicle, which safely collects occupant information in a vehicle without personal information leakage in the event of an emergency based on an existing e-call system.

The problem(s) that the present disclosure aims to solve are not limited to the problem(s) mentioned above, and other unstated problem(s) will be readily apparent to those skilled in the art from the description below.

In a general aspect of the disclosure, a device for collecting occupant information in a vehicle, includes a processor configured to collect occupant information in the vehicle, and a memory that stores at least one instruction executed by the processor, wherein, in response to an emergency occurring in the vehicle, the processor broadcasts emergency Wi-Fi connection information to connect with a user terminal via emergency Wi-Fi (eWIFI), collects occupant information from the user terminal connected via the eWIFI, and transmits the occupant information to a Public Safety Answering Point (PSAP) server.

The processor may be included in a Telematics Control Unit (TCU) mounted in the vehicle.

In response to a request for occupant information from the PSAP server, the processor may be further configured to: transmit a request for the emergency Wi-Fi connection information to a Mobile Network Operator (MNO); and receive the emergency Wi-Fi connection information from the MNO.

The emergency Wi-Fi connection information may include a Service Set Identifier (SSID) for identifying Wi-Fi broadcast by the processor and a personal information encryption key.

The user terminal may be configured to: receive the personal information encryption key from the MNO; encrypt the personal information using the received personal information encryption key; and transmit the encrypted information to the TCU.

The PSAP server may be configured to: request a decryption key from the MNO to decrypt the occupant information; and receive the decryption key from the MNO to decrypt the occupant information.

The user terminal may be further configured to: transmit an update request for the emergency Wi-Fi connection to the MNO; receive the emergency Wi-Fi connection information from the MNO in response to the update request; and update security information for the emergency Wi-Fi connection based on the received emergency Wi-Fi connection information.

The user terminal may establish and complete the emergency Wi-Fi connection in response to the updated security information matching the emergency Wi-Fi connection information broadcasted by the processor.

In another general aspect of the disclosure, a processor-implemented method for collecting occupant information in a vehicle, includes: in response to an emergency occurring in the vehicle, broadcasting, by a processor, emergency Wi-Fi connection information and connecting with a user terminal via emergency Wi-Fi (eWIFI); collecting, by the processor, the occupant information from the user terminal connected via the eWIFI; and transmitting, by the processor, the occupant information to a Public Safety Answering Point (PSAP) server.

The method may further include: transmitting, by the processor, a request for the emergency Wi-Fi connection information to a Mobile Network Operator (MNO) in response to an occupant information request from the PSAP server; and receiving, by the processor, the emergency Wi-Fi connection information from the MNO, wherein the connection with the user terminal via the emergency Wi-Fi may include transmitting a personal information encryption key included in the received emergency Wi-Fi connection information to the user terminal, the transmitting of the information to the PSAP server including transmitting the personal information encryption key along with the occupant information to the PSAP server.

In yet another general aspect of the disclosure, a system for collecting and transmitting occupant information, includes: a vehicle including a processor; and a user terminal of an occupant in the vehicle, wherein, in response to an emergency occurring in the vehicle, the processor is configured to broadcast emergency Wi-Fi connection information to connect with the user terminal via emergency Wi-Fi (eWIFI), wherein, upon connection with the processor via the eWIFI, the server is configured to encrypt occupant information in the user terminal and transmit the encrypted occupant information to the processor via the eWIFI, and wherein the processor is further configured to transmit the encrypted occupant information to a Public Safety Answering Point (PSAP) server.

The processor may further be configured to: transmit a request for the emergency Wi-Fi connection information to a Mobile Network Operator (MNO) in response to an occupant information request from the PSAP server; and receive the emergency Wi-Fi connection information from the MNO, wherein the MNO may be configured to transmit a personal information encryption key included in the received emergency Wi-Fi connection information to the user terminal, and wherein the encrypted occupant information transmitted to the PSAP server may include the personal information encryption key.

The PSAP server may be configured to decrypt the encrypted occupant information by using the decryption key received from the MNO.

The occupant information may include at least one of medical information or legal information, or a combination thereof, wherein the medical information may include any personal information related to a preexisting medical condition, a blood type, or allergies, and wherein the legal information may include any information related to finances, a national identity number, a home address, a next of kin, or a legal representative.

Specific details of other embodiments are included in the detailed description and accompanying drawings.

In an embodiment of the present disclosure, based on an existing e-call system, occupant information in the vehicle may be safely collected without personal information leakage in the event of an emergency.

In an embodiment of the present disclosure, in the event of an accident involving a multi-occupant vehicle, such as public transportation, the scale of the accident, occupant information, and other details may be quickly identified.

In an embodiment of the present disclosure, in the event of an accident, the scale of the accident and occupant information may be quickly collected using the Minimum Set of Data (MSD).

In an embodiment of the present disclosure, the collection of vehicle occupant information, centered on the in-vehicle TCU, enables the reduction of the processing load on the Public Safety Answering Point (PSAP) IP Multimedia Subsystem (IMS) server.

In an embodiment of the present disclosure, a method is provided for requesting information collection at the discretion of public entities such as PSAP servers, and using security keys within communication servers, thereby resolving security issues such as personal information leakage. In other words, since only the PSAP server authorized by the MNO receives the decryption key, only the PSAP server may obtain information, thus personal information may be safely protected from data leakage and other hacking in the TCU.

### BRIEF DESCRIPTION OF THE DRAWINGS

FIG. 1 illustrates a network configuration of a device for collecting occupant information in a vehicle according to an embodiment of the present disclosure.
FIG. 2 is a block diagram illustrating a device for collecting occupant information in a vehicle according to an embodiment of the present disclosure.
FIGS. 3 to 6 are views illustrating in detail an operation process of a device for collecting occupant information in a vehicle, divided into steps, according to an embodiment of the present disclosure.
FIG. 7 is a flowchart illustrating a method for collecting occupant information in a vehicle according to an embodiment of the present disclosure.

### DETAILED DESCRIPTION OF THE ILLUSTRATED EMBODIMENTS

The embodiments of the present disclosure described herein, along with specific structural or functional descriptions, are provided merely for the purpose of describing the embodiments of the present disclosure. The embodiments may be implemented in various forms and should not be construed as being limited to the embodiments described herein.

The present disclosure may be modified in various ways and take on many forms. Accordingly, specific embodiments are illustrated in the drawings and described in detail herein. However, this is not intended to limit the present disclosure to any specific form of implementation but should be understood to include all modifications, equivalents, and substitutes that fall within the spirit and scope of the present disclosure.

Terms including ordinal numbers such as first, second, and the like used herein may be used to describe various components, but the various components are not limited by these terms. The terms are used only for the purpose of distinguishing one component from another component. For example, a first component may be named a second component without departing from the scope of rights of the present disclosure. Likewise, the second component may be named the first component.

When a component is referred to as being "connected" or "coupled" to another component, the component may be directly connected or coupled to another component, but it should be understood that still another component may be present between the component and another component. Conversely, when a component is referred to as being "directly connected" or "directly coupled" to another, it should be understood that still another component may not be present between the component and another component. Other expressions, that is, "between" and "just between" or "adjacent to" and "directly adjacent to", for describing a relationship between components, should be interpreted in a similar manner.

The terms used in the present specification are merely employed to describe specific embodiments and are not intended to limit the present disclosure. Unless the context clearly dictates otherwise, the singular form includes the plural form. In the present specification, the terms "comprising," "having," or the like are used to specify that a feature, a number, a step, an operation, a component, an element, or a combination thereof described herein exists, and they do not preclude the presence or addition of one or more other features, numbers, steps, operations, components, elements, or combinations thereof.

Unless otherwise defined, all terms used herein, including technical and scientific terms, have the same meaning as commonly understood by those skilled in the art to which the present disclosure pertains. Terms generally defined in commonly used dictionaries should be interpreted as having meanings consistent with the context of the relevant technology and should not be construed in an idealized or overly formal sense unless explicitly defined herein.

Embodiments of the present disclosure will be described hereinafter in more detail with reference to the accompanying drawings. Same reference numerals are used for identical components in the drawings, and redundant descriptions of the same components are omitted.

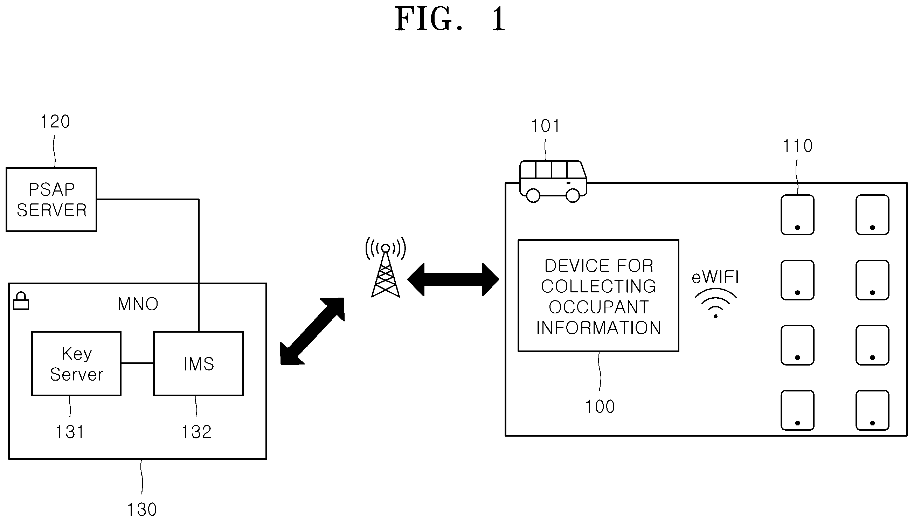

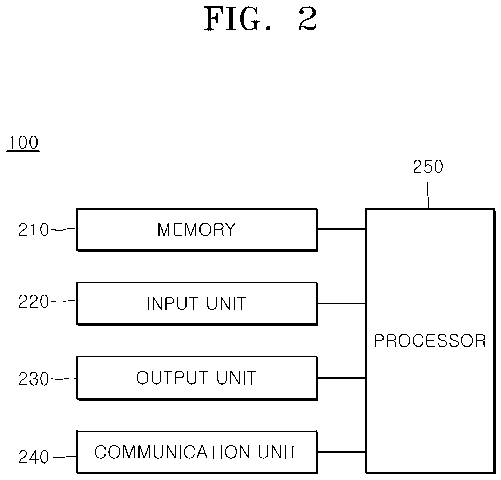

FIG. 1 illustrates a network configuration of a device for collecting occupant information in a vehicle according to an embodiment of the present disclosure. FIG. 2 is a block diagram illustrating a device for collecting occupant information in a vehicle according to an embodiment of the present disclosure.

Referring to FIGS. 1 to 2, a device 100 for collecting occupant information in a vehicle according to an embodiment of the present disclosure may include memory 210, an input unit 220, an output unit 230, a communication unit 240, and a processor 250.

The memory 210 may store one or more instructions executed by the processor 250. The memory 210 may be implemented as internal memory, such as ROM included in the processor 250 (e.g., electrically erasable programmable read-only memory (EEPROM)), RAM, or as memory separate from the processor 250.

In this case, the memory 210 may be implemented in the form of memory embedded in the device 100 or in the form of memory that is detachably attached to the device 100, depending on the purpose of data storage. For example, data for driving the device 100 may be stored in the memory 210 embedded in the device 100, and data for expansion functions of the device 100 may be stored in the memory 210 detachably attached to the device 100.

In this case, the memory 210 embedded in the device 100 may be implemented as at least one of the following: volatile memory (e.g., dynamic RAM (DRAM), static RAM(SRAM), or synchronous dynamic RAM (SDRAM)), non-volatile memory (e.g., one-time programmable ROM (OTPROM), programmable ROM (PROM), erasable and programmable ROM (EPROM), electrically erasable and programmable ROM (EEPROM), mask ROM, flash ROM), flash memory (e.g., NAND flash or NOR flash), hard drive, or solid-state drive (SSD).

In addition, the memory 210, detachably attached to the device 100, may be implemented in forms such as a memory card (e.g., compact flash (CF), secure digital (SD), micro secure digital (Micro-SD), mini secure digital (Mini-SD), extreme digital (xD), multi-media card (MMC), etc.), or external memory connectable via a USB port (e.g., USB memory), among others.

The input unit 220 may be configured with a microphone for e-call, an accident determination logic interface, and other components.

The output unit 230 may be configured with a speaker, an in-vehicle interface (such as an accident recognition output LED, or a signal to display accident status on the vehicle infotainment system), and other components.

The communication unit 240 may perform wired or wireless communication with other devices or networks. To this end, the communication unit 240 may include a communication module that supports at least one of various wired or wireless communication methods. For example, the communication module may be implemented in the form of a chipset.

The wireless communication supported by the communication unit 240 may include, for example, Wireless Fidelity (Wi-Fi), Wi-Fi Direct, Bluetooth, Ultra-Wide Band (UWB), and Near Field Communication (NFC), among others. In addition, the wired communication supported by the communication unit 240 may include, for example, USB or High Definition Multimedia Interface (HDMI), among others.

The processor 250 may be implemented by being included in a Telematics Control Unit (TCU) mounted in a vehicle 101. In this specification, the processor 250 will be described as being limited to the TCU. In this case, the TCU will be described with the reference numeral of the processor 250 indicated. This is merely for the convenience of description and ease of understanding, and it is evident that this is not intended to limit the scope of the present disclosure.

When an emergency occurs in the vehicle 101, the TCU 250 may broadcast emergency Wi-Fi connection information, thereby establishing a connection with a user terminal 110 via emergency Wi-Fi (eWIFI).

The TCU 250 may collect occupant information from the user terminal 110 connected via the emergency Wi-Fi and transmit this information to a Public Safety Answering Point (PSAP) server 120.

To this end, the TCU 250 may transmit a request for the emergency Wi-Fi connection information to a Mobile Network Operator (MNO) 130 based on an occupant information request from the PSAP server 120. In response to the request, the TCU 250 may receive the emergency Wi-Fi connection information from the MNO 130 and transmit the received emergency Wi-Fi connection information to the PSAP server 120.

In this case, the emergency Wi-Fi connection information may include a Service Set Identifier (SSID) for identifying the Wi-Fi broadcast by the TCU 250 and a personal information encryption key.

In this case, the personal information encryption key may be transmitted from the MNO 130 to the user terminal 110. The user terminal 110 may transmit the personal information encryption key along with the occupant information to the PSAP server 120.

The PSAP server 120 may request a decryption key from the MNO 130 to decrypt the occupant information, and may receive the decryption key from the MNO 130 to decrypt the occupant information.

In other words, the PSAP server 120 may decrypt the occupant information using the decryption key received from the MNO 130. For reference, in the embodiment, the decryption process may proceed by introducing an asymmetric key concept, where the encryption key and decryption key are different.

The user terminal 110 may update eWIFI security information for an emergency Wi-Fi connection with the TCU 240.

In other words, the user terminal 110 may transmit an update request for the emergency Wi-Fi connection to the MNO 130. To this end, the user terminal 110 may monitor whether the previously received emergency Wi-Fi connection information has expired and, if it is determined to have expired based on the monitoring result, transmit an update request for the emergency Wi-Fi connection to an IMS 132 of the MNO 130.

The user terminal 110 may receive the emergency Wi-Fi connection information from a key server 131 of the MNO 130 in response to the update request. The user terminal 110 may update the security information for connecting to the emergency Wi-Fi based on the received emergency Wi-Fi connection information.

The user terminal 110 may compare the updated security information with the emergency Wi-Fi connection information broadcast by the TCU 250. When the comparison result indicates that the updated security information matches the emergency Wi-Fi connection information, the user terminal 110 may establish and complete the emergency Wi-Fi connection with the TCU 250.

The TCU 250 may request occupant information in the vehicle 101 from at least one user terminal 110 with which the emergency Wi-Fi connection has been completed. The TCU 250 may receive encrypted occupant information from the at least one user terminal 110 and transmit the received encrypted occupant information to the PSAP server 120 using a Minimum Set of Data (MSD).

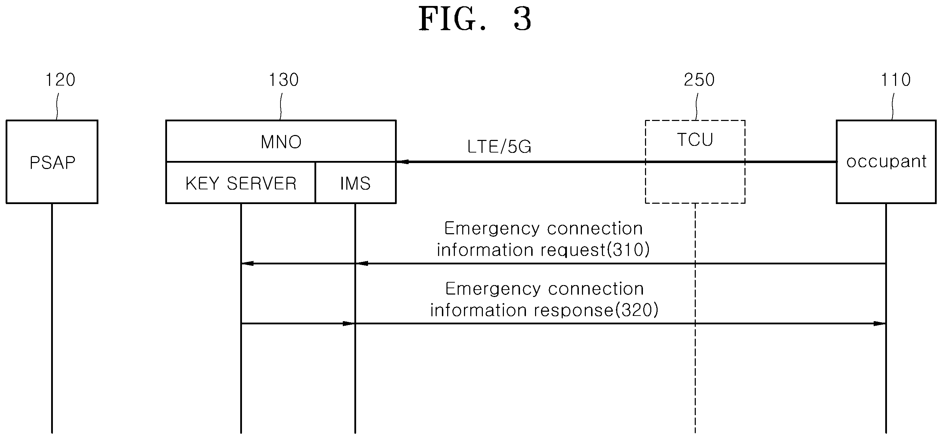

FIGS. 3 to 6 are views illustrating in detail an operation process of a device for collecting occupant information in a vehicle, divided into steps, according to an embodiment of the present disclosure.

First, an eWIFI security information update is described with reference to FIG. 3 as follows.

The user terminal 110, such as a mobile phone, may periodically request eWIFI information (emergency Wi-Fi connection information) from the MNO 130 (310). In this case, the user terminal 110 may monitor the expiration of the previously received eWIFI information and periodically request the eWIFI information.

The user terminal 110 may periodically receive information (emergency Wi-Fi connection information) for emergency eWIFI connection from the server 131 of the MNO 130 (320).

In this case, the emergency Wi-Fi connection information may include an eWIFI SSID (which identifies the WIFI SSID broadcast by the TCU 250), an eWIFI Password (which connects when the SSID key value identified by the mobile phone matches, and fails to establish a connection when there is no match), and a personal information encryption key (the mobile phone receives the personal information encryption key to be transmitted to the TCU 250 from the server 131 of the MNO 130).

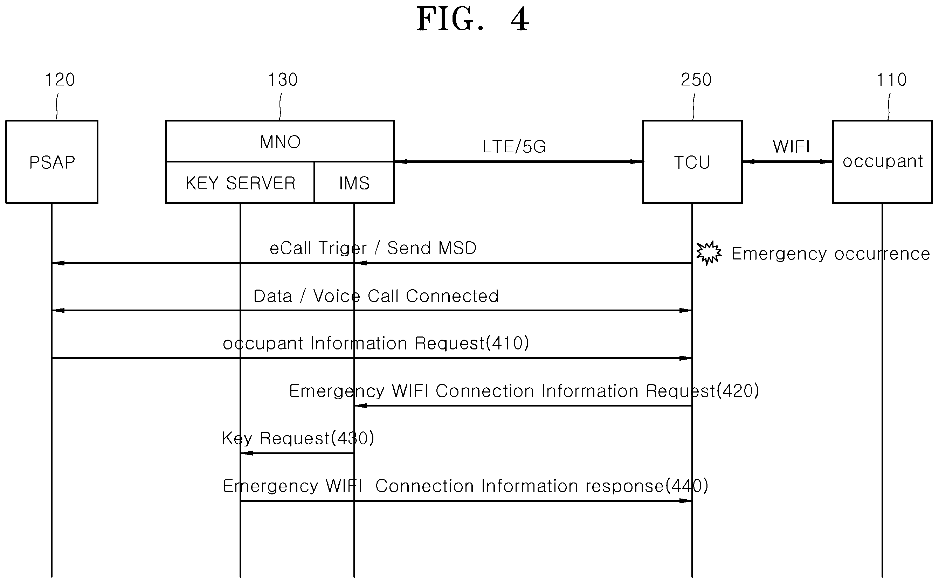

Next, the transmission of eWIFI security information (SSID, security key) is described with reference to FIG. 4 as follows.

The PSAP server 120 may transmit eWIFI security information (SSID, security key) to the TCU 250 after performing an eCall.

To this end, the PSAP server 120 may determine the need for collecting occupant information and request the TCU 250 to collect the occupant information (410). The TCU 250 may initiate a protocol to collect surrounding device information only when there is a request from the PSAP server 120.

The TCU 250 may request emergency Wi-Fi connection information (WIFI SSID, security key) to be used for eWIFI from the MNO 130 at the request of the PSAP server 120 (420). The MNO 130 may forward a key request to a KEY SERVER upon receiving the request for the emergency Wi-Fi connection information using an IMS (430).

Accordingly, the MNO 130 may transmit the emergency Wi-Fi connection information, such as the encryption key (WIFI SSID, security key), used for establishing a Wi-Fi connection with the user terminal 110, to the TCU 250 using the KEY SERVER (440). In this case, the SSID and security key transmitted from the MNO 130 may match the information (emergency Wi-Fi connection information) that the user terminal 110 periodically manages.

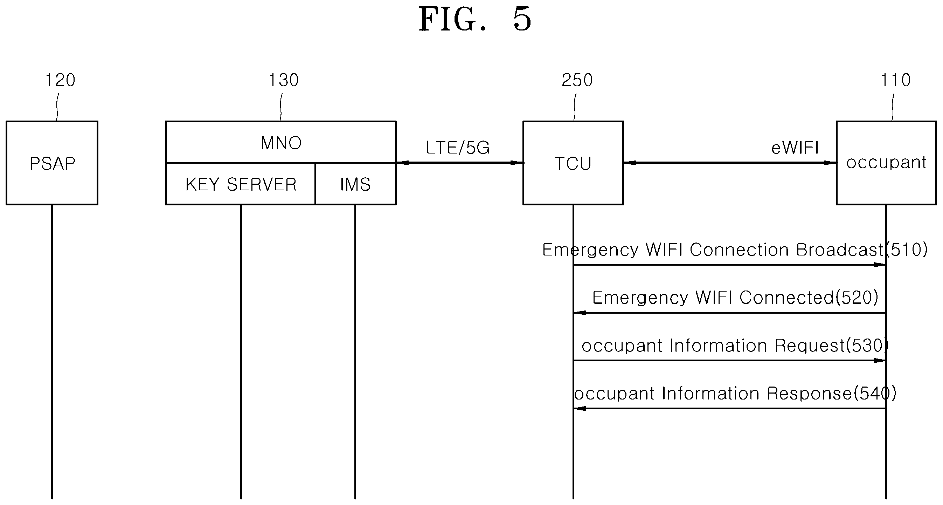

Next, an eWIFI connection and information collection is described with reference to FIG. 5 as follows.

The TCU 250 may broadcast the WIFI information using the received WIFI SSID and security key (510).

The user terminal 110, which receives the broadcast information in the vehicle, may perform a WIFI connection (520).

The TCU 250 may request occupant information from the user terminals 110 connected to eWIFI (530).

Each user terminal 110 may encrypt and transmit the occupant information to the TCU 250 (540).

When encrypting the occupant information, the occupant terminals, i.e., each of the user terminals 110, may use the encryption key (security key) periodically managed by the MNO 130 for the encryption.

For reference, the encrypted data (occupant information) may not be decrypted by the TCU 250 (as the TCU does not have a decryption key).

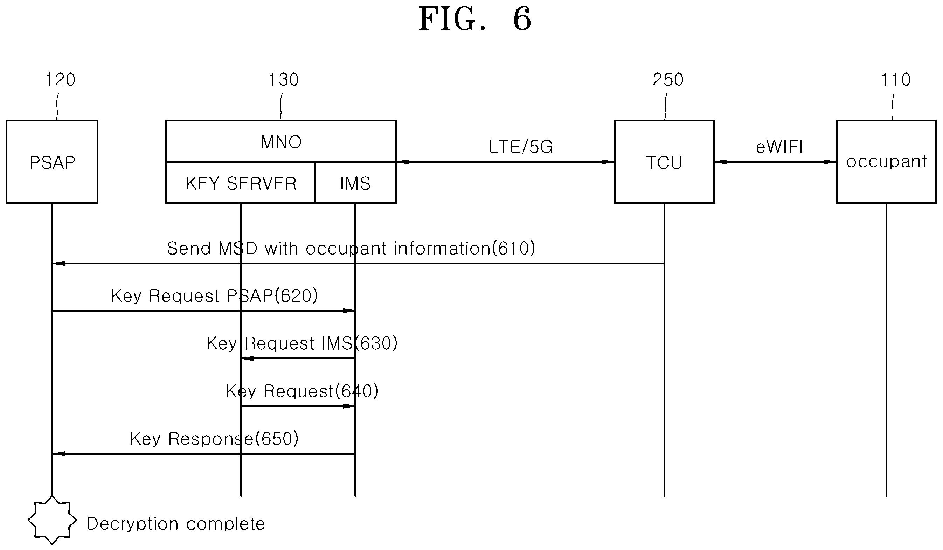

Next, the collection and decryption of occupant information by the PSAP server is described with reference to FIG. 6 as follows.

The TCU 250 may transmit the occupant information to the PSAP server 120 using the MSD (610).

The PSAP server 120 may request decrypted encryption information from the MNO 130 (620).

The MNO 130 may hold a decryption key capable of decrypting the information encrypted by the user terminal 110. Accordingly, the IMS of the MNO 130 may request the decryption key from the KEY SERVER (630), and the KEY SERVER of the MNO 130 may respond to the IMS regarding the decryption key request (640).

The MNO 130 may transmit the decryption key to the PSAP server 120 using the IMS (650). In this case, the decryption key may not be shared in the eWIFI configuration. The PSAP server 120 may complete the collection by decrypting the occupant information in the accident vehicle using the received decryption key.

The device described above may be implemented using hardware components, software components, or a combination of hardware and software components. For example, the devices and components described in the embodiments may be implemented using one or more general-purpose or special-purpose computers, such as a processor, controller, arithmetic logic unit (ALU), digital signal processor (DSP), microcomputer, field-programmable array (FPA), programmable logic unit (PLU), microprocessor, or any other device capable of executing and responding to instructions. The processing device may execute an operating system (OS) and one or more software applications running on the operating system. The processing device may also access, store, manipulate, process, and generate data in response to the execution of software. For ease of understanding, the processing device is described as being used singularly. However, those skilled in the art will understand that the processing device may include multiple processing elements and/or multiple types of processing elements. For example, the processing device may include multiple processors or a single processor and a single controller. In addition, other processing configurations, such as a parallel processor, are also possible.

The software may include a computer program, code, instructions, or a combination of one or more of these, and configure the processing device to operate as desired or instruct the processing device independently or collectively. The software and/or data may be embodied permanently or temporarily in any type of machine, component, physical device, virtual equipment, computer storage medium or device, or transmitted signal wave, to be interpreted by the processing device or to provide instructions or data to the processing device. The software may be distributed and stored or executed in a distributed manner on computer systems connected via a network. The software and data may be stored on one or more computer-readable storage media.

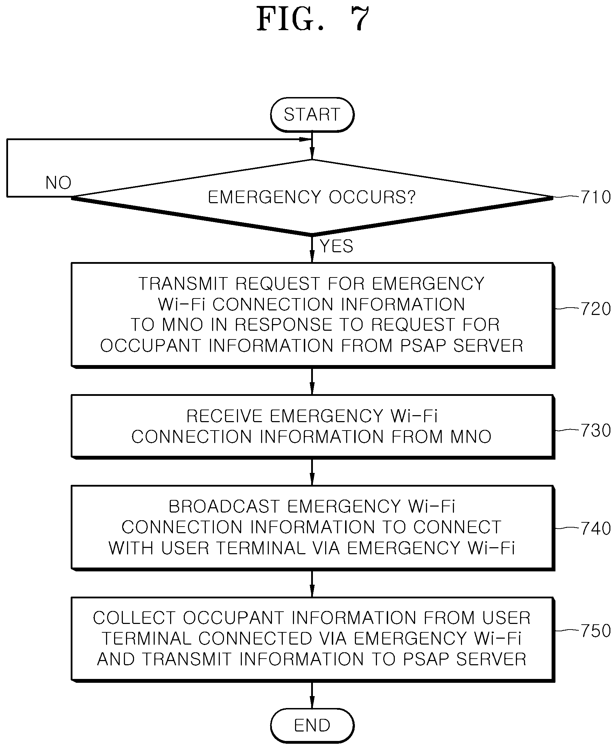

FIG. 7 is a flowchart illustrating a method for collecting occupant information in a vehicle according to an embodiment of the present disclosure.

A method for collecting occupant information in a vehicle described herein is only an example of the present disclosure, and various other steps may be added as needed, as described below. Furthermore, the steps below may also be performed in a different order, so that the present disclosure is not limited to each of the steps and the order thereof as described below.

Referring to FIGS. 1, 2, and 7, if an emergency occurs in the vehicle 101 ("Yes" direction at 710), at step 720, the TCU 250 may transmit a request for emergency Wi-Fi connection information to the MNO 130 in response to a request for occupant information from the PSAP server 120.

In this case, if no emergency occurs ("No" direction at 710), the TCU 250 may check whether an emergency has occurred in the vehicle 101 for a preset number of times or duration.

Next, at step 730, the TCU 250 may receive the emergency Wi-Fi connection information from the MNO 130.

Next, at step 740, the TCU 250 may broadcast the emergency Wi-Fi connection information to establish a connection with the user terminal 110 via emergency Wi-Fi.

Next, at step 750, the TCU 250 may collect the occupant information of the vehicle 101 from the user terminal 110 connected via the emergency Wi-Fi and transmit this information to the PSAP server 120.

As a non-limiting example, the occupant information may include at least one of medical information or legal information, or a combination thereof. The medical information, for example, may include any personal information related to a preexisting medical condition, a blood type, or allergies. The legal information may include any information related to finances, a national identity number, a home address, a next of kin, a legal representative.

As described above, although embodiments of the present disclosure have been described with limited embodiments and drawings, it will be apparent to those skilled in the art that various modifications and variations can be made from these embodiments disclosed herein. For example, suitable results may be achieved if the described techniques are performed in a different order and/or if components in a described system, structure, device, or circuit are combined in a different manner and/or replaced or supplemented by other components or their equivalents.

Therefore, other implementations, other embodiments and equivalents of the claims also fall within the scope of the following claims.

## Claims

1. A device for collecting occupant information in a vehicle, the device comprising:
a processor configured to collect occupant information in the vehicle; and
a memory that stores at least one instruction executed by the processor, wherein, in response to an emergency occurring in the vehicle, the processor is configured to:
broadcast emergency Wi-Fi connection information to connect with a user terminal via emergency Wi-Fi (eWIFI);
collect occupant information from the user terminal connected via the eWIFI; and
transmit the occupant information to a Public Safety Answering Point (PSAP) server.

2. The device of claim 1, wherein the processor is included in a Telematics Control Unit (TCU) mounted in the vehicle.

3. The device of claim 1 or 2, wherein, in response to a request for occupant information from the PSAP server, the processor is further configured to:
transmit a request for the emergency Wi-Fi connection information to a Mobile Network Operator (MNO); and
receive the emergency Wi-Fi connection information from the MNO.

4. The device of any one of claims 1 to 3, wherein the emergency Wi-Fi connection information includes a Service Set Identifier (SSID) for identifying Wi-Fi broadcast by the processor and a personal information encryption key.

5. The device of claim 4, wherein the user terminal is configured to:
receive the personal information encryption key from the MNO;
encrypt the personal information using the received personal information encryption key; and
transmit the encrypted information to the TCU.

6. The device of claim 5, wherein the PSAP server is configured to:
request a decryption key from the MNO to decrypt the occupant information; and
receive the decryption key from the MNO to decrypt the occupant information.

7. The device of any one of claims 1 to 6, wherein the user terminal is further configured to:
transmit an update request for the emergency Wi-Fi connection to the MNO;
receive the emergency Wi-Fi connection information from the MNO in response to the update request; and
update security information for the emergency Wi-Fi connection based on the received emergency Wi-Fi connection information.

8. The device of claim 7, wherein the user terminal establishes and completes the emergency Wi-Fi connection in response to the updated security information matching the emergency Wi-Fi connection information broadcasted by the processor.

9. A processor-implemented method for collecting occupant information in a vehicle, the method comprising: in response to an emergency occurring in the vehicle,
broadcasting, by a processor, emergency Wi-Fi connection information and connecting with a user terminal via emergency Wi-Fi (eWIFI);
collecting, by the processor, the occupant information from the user terminal connected via the eWIFI; and
transmitting, by the processor, the occupant information to a Public Safety Answering Point (PSAP) server.

10. The method of claim 9, further comprising:
transmitting, by the processor, a request for the emergency Wi-Fi connection information to a Mobile Network Operator (MNO) in response to an occupant information request from the PSAP server; and
receiving, by the processor, the emergency Wi-Fi connection information from the MNO,
wherein the connection with the user terminal via the emergency Wi-Fi includes transmitting a personal information encryption key included in the received emergency Wi-Fi connection information to the user terminal, the transmitting of the information to the PSAP server including transmitting the personal information encryption key along with the occupant information to the PSAP server.

11. A system for collecting and transmitting occupant information, the system comprising:
a vehicle comprising a processor; and
a user terminal of an occupant in a vehicle,
wherein the processor is configured to acquire information related to the occupant,
wherein, in response to an emergency occurring in the vehicle, the processor is further configured to broadcast emergency Wi-Fi connection information to connect with the user terminal via emergency Wi-Fi (eWIFI),
wherein, upon connection with the processor via the eWIFI, the server is configured to encrypt occupant information in the user terminal and transmit the encrypted occupant information to the processor via the eWIFI, and
wherein the processor is further configured to transmit the encrypted occupant information to a Public Safety Answering Point (PSAP) server.

12. The system of claim 11,
wherein the processor is further configured to:
transmit a request for the emergency Wi-Fi connection information to a Mobile Network Operator (MNO) in response to an occupant information request from the PSAP server; and
receive the emergency Wi-Fi connection information from the MNO, and
wherein the MNO is configured to transmit a personal information encryption key included in the received emergency Wi-Fi connection information to the user terminal, and
wherein the encrypted occupant information transmitted to the PSAP server includes the personal information encryption key.

13. The system of claim 12, wherein the PSAP server is configured to decrypt the encrypted occupant information by using the decryption key received from the MNO.

14. The system of any one of claims 11 to 13, wherein the occupant information comprises at least one of medical information or legal information, or a combination thereof,
wherein the medical information includes any personal information related to a preexisting medical condition, a blood type, or allergies, and
wherein the legal information includes any information related to finances, a national identity number, a home address, a next of kin, or a legal representative.
